# EUROPEAN PATENT SPECIFICATION

(11) **EP 3 666 510 B1**
(45) Date of publication and mention of the grant of the patent: **22.03.2023**
(21) Application number: 19215375.7
(22) Date of filing: 11.12.2019
(51) Int. Cl.: B29D 30/06

(54) **METHOD FOR FORMING A SEALANT LAYER IN A TIRE AND TIRE HAVING A SEALANT LAYER**
VERFAHREN ZUR FORMUNG EINER DICHTMITTELSCHICHT IN EINEM REIFEN UND REIFEN MIT EINER DICHTMITTELSCHICHT
PROCÉDÉ DE FORMATION D'UNE COUCHE D'ÉTANCHÉITÉ DANS UN PNEUMATIQUE ET PNEUMATIQUE DOTÉ D'UNE COUCHE D'ÉTANCHÉITÉ

(30) Priority: 13.12.2018 US 201862778948 P; 15.05.2019 US 201916413007
(43) Date of publication of application: 17.06.2020
(73) Proprietor: The Goodyear Tire & Rubber Company, Akron, OH 44316 (US)
(72) Inventor: GRIFFOIN, Jean-Claude Patrice Philippe, L-9170 Mertzig (LU); PIERRET, Kevin Erik M., B-6600 Bastogne (BE); JOVANIC, Nicolas, F-57100 Thionville (FR)
(74) Representative: Kutsch, Bernd

(56) References cited:
- EP-A1- 2 168 758
- EP-A1- 2 660 037
- EP-A1- 2 865 515
- EP-A1- 3 199 382
- EP-A1- 3 360 701
- WO-A1-2016/105410
- JP-A- 2001 018 609
- US-A- 4 398 492
- US-A- 4 418 093

## Description

### Field of the invention

The invention relates in general to tire manufacturing, and more particularly to a method for forming a tire with post cure sealant and to a respective manufactured tire.

### Background of the invention

Pneumatic tires with puncture sealant or tire constructions with puncture sealing properties are known to those skilled in the tire art. Typically, such tires include a layer of sealant typically sprayed or applied otherwise on the inside of the tire. The sealant layer typically represents a significant mass added to the tire at the most critical diameter as far as tire imbalance is concerned. Prior art lay-ups of the sealant often result in an asymmetrical pattern with respect to the tire centerplane and can result in a tire dynamic imbalance. Thus, it is desired to have an improved method and apparatus for forming a tire with a sealant layer that has no dynamic imbalance.

US 4,398,492 describes a method and a tire in accordance with the preamble of claim 1 and 8 respectively.

JP 2001 018609 A describes a method of continuously and spirally applying a sealant layer onto the inside of a tire cavity.

EP 2 865 515 A1 and EP 3 360 701 A1 describe further methods of applying a sealant composition to the inner surface of a tire.

### Summary of the invention

The invention relates to a method in accordance with claim 1 and to a tire in accordance with claim 8.

Dependent claims refer to preferred embodiments of the invention.

A method for forming a sealant layer in a tire is disclosed, the method comprising the steps of: providing a tire; and applying a plurality of strip-shaped windings of a sealant material to form a sealant layer to the inside of the tire under the crown of the tire, wherein each winding has a straight portion aligned at a zero degree angle with respect to the tire mid-circumferential plane.

The sealant material is sprayed or extruded onto the inside of the tire in a continuous manner.

Preferably, the tire is rotated circumferentially with respect to a sealant material application means, preferably a nozzle, during application of the sealant material. Alternatively or additionally, a sealant material application means, preferably a nozzle, is rotated circumferentially with respect to the tire during application of the sealant material for applying the sealant material inside of the tire.

A number of 5 to 30, more preferably 8 to 12, strip-shaped windings are applied.

The strip-shaped windings are applied in an abutting manner such that the windings do not overlap.

Alternatively, the strip-shaped windings are applied in a spaced manner such that the windings do not overlap and that there is a gap between adjacent windings.

Preferably, the straight portion extends over an angular range of 320 degree to 358 degree, more preferably 330 degree to 355 degree or 340 to 350 degree.

Preferably, the plurality of strip-shaped windings each or each except one or two has a transition section inclined under an angle with respect to the tire mid-circumferential plane.

Preferably, the angle is in a range of from 5 to 30 degree, preferably 10 to 25 degree and/or the transition section extends over an angular range of from 40 to 2 degree, more preferably 30 degree to 5 degree or 20 to 10 degree.

Preferably, each winding is joined together by an angled transition section.

Preferably, the method further comprises removing at least a portion of the outer edges of the sealant layer to form a balanced tire.

Also, a tire is provided having a tread, opposed sidewalls and an inner surface opposite the tread, wherein said inner surface has a sealant layer formed by spirally applying a plurality of sealant windings, and wherein each winding has a straight portion aligned at a zero degree angle with respect to the tire mid-circumferential plane.

Preferably, a portion of the outer edges of the sealant layer is removed to form a balanced tire and/or each winding is joined with an angled transition section.

### Definitions

"Axial" and "axially" means the lines or directions that are parallel to the axis of rotation of the tire.

"Circumferential" means lines or directions extending along the perimeter of the surface of the annular tread perpendicular to the axial direction or along the perimeter of the inner cavity surface of the tire under the tread area perpendicular to the axial direction.

"Inner Liner" means the layer or layers of elastomer or other material that form the inside surface of a tubeless tire and that contain the inflating fluid within the tire.

"Radial" and "radially" mean directions radially toward or away from the axis of rotation of the tire.

### Brief Description of the Drawings

The invention will be described by way of example and with reference to the accompanying drawings in which:
FIG. 1 is a front view of a schematic of a tire sealant spray apparatus and tire.
FIG. 2 is a close-up view of the tire and nozzle of the tire sealant spray apparatus.
FIG. 3 illustrates a spirally wound sealant layup using the tire sealant spray apparatus.
FIG. 4A illustrates a close-up view of the spirally wound sealant layup, while FIG. 4B illustrates the balanced spirally wound sealant layup;
FIG. 5 illustrates a sealant layup of the present invention using the tire sealant spray apparatus.
FIG. 6 illustrates a close-up view of the sealant layup of the present invention.

### Detailed Description of Example Embodiments of the Invention

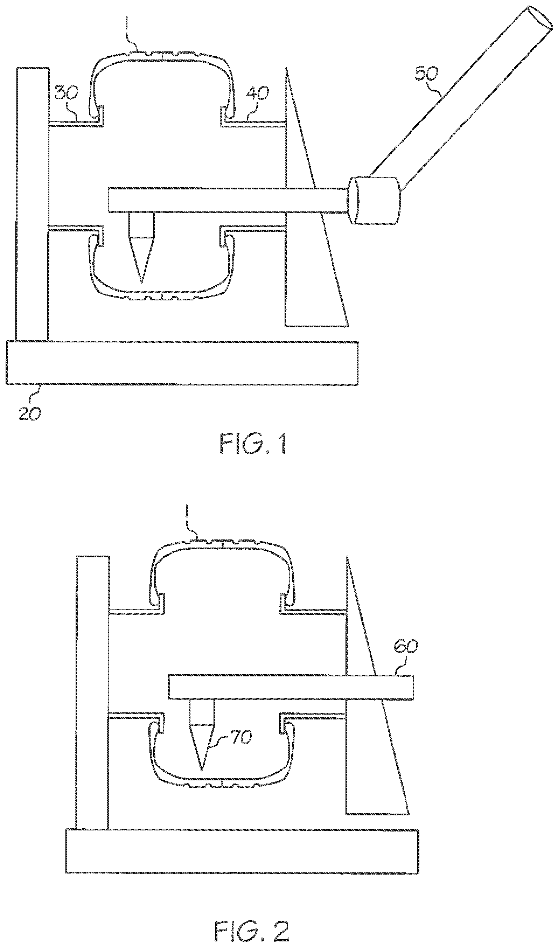

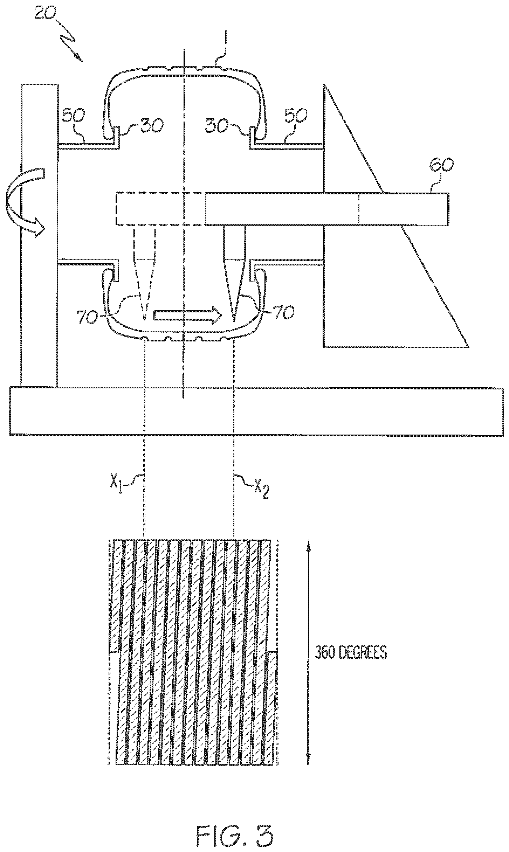

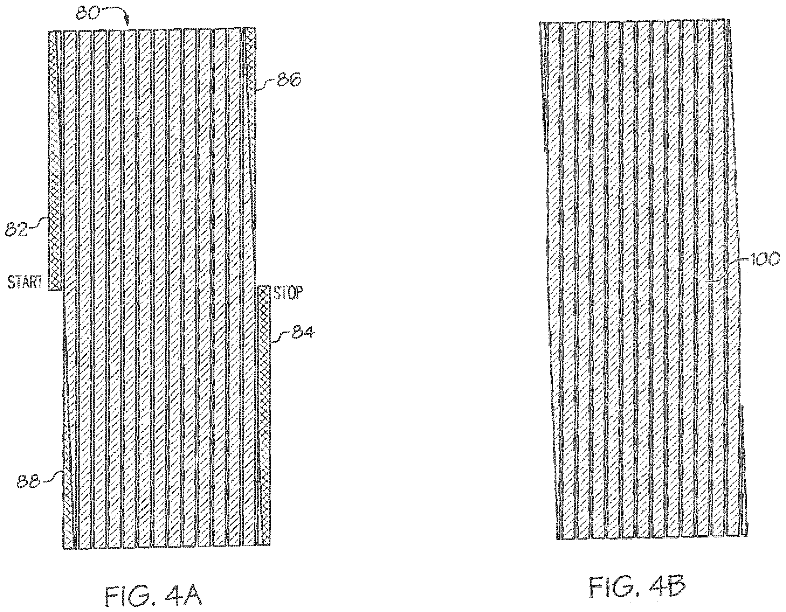

Figs. 1 and 2 illustrate a tire 1, preferably a pneumatic tire 1, rotatably mounted in a sealant dispensing stand 20. The sealant dispensing stand 20 has tire grippers 30 for holding the tire and tire spreaders 40 for enlarging the tire width. The sealant dispensing stand 20 further includes a robot arm 50 having an application bar 60. The application bar 60 has a sealant dispensing nozzle 70. The robot arm 50 can move the application bar 60 in the axial direction of the tire to dispense a layer of sealant preferably after curing the tire 1. Fig. 3 illustrates the dispensing nozzle applying a layer of sealant in a spirally wound configuration 80 as the dispensing nozzle translates in a direction parallel to the axis of rotation of the tire. A close-up view of the spirally wound configuration is shown in Fig. 4A. The spirally wound configuration 80 is spirally wound at a slight angle, typically in the range of 3-6 degrees (as measured from tire equatorial plane). The end portions 82, 84, 86, 88, shown as cross-hatched shading, result in the tire imbalance. Fig. 4B illustrates a spirally wound configuration 100 with the end portions 82, 84, 86, 88 removed, resulting in a balanced sealant configuration.

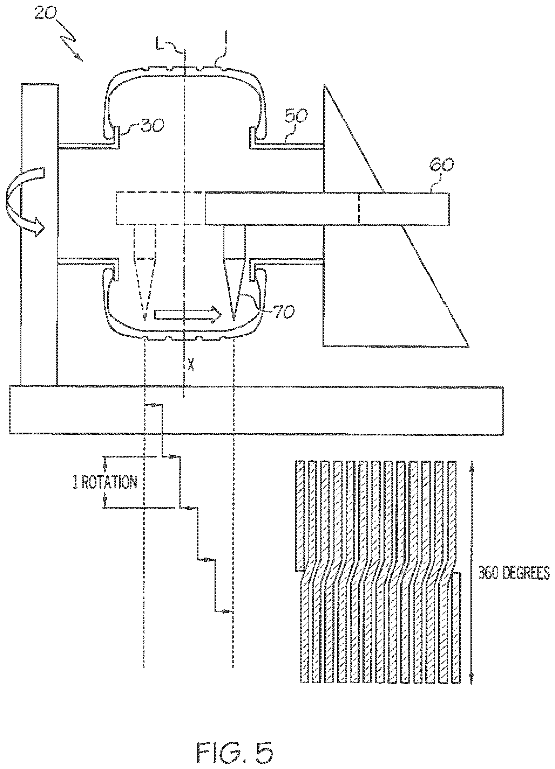

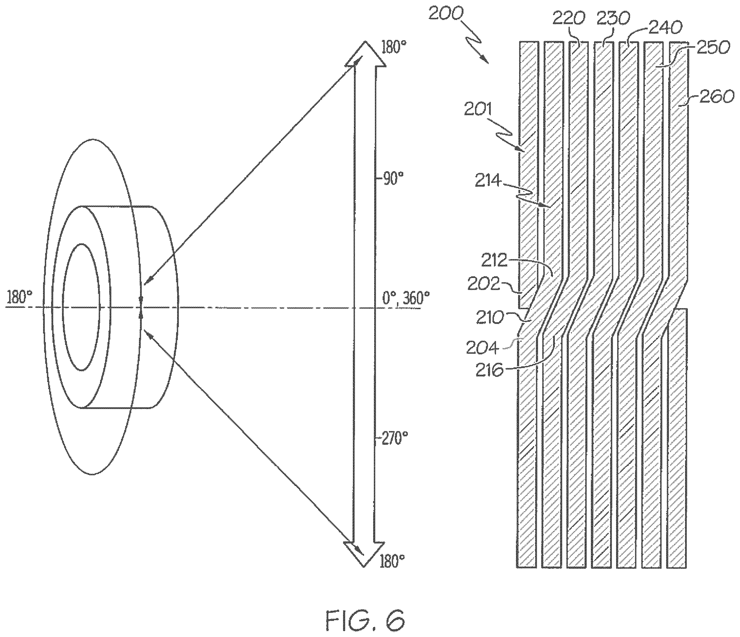

Figs. 5-6 illustrate a second embodiment of the invention of a tire with a balanced sealant layer. The tire 1 is again preferably a pneumatic tire and the sealant layer is preferably applied after curing the tire 1. The sealant layer configuration 200 is shown in Fig. 6. The sealant layer 200 is formed of multiple windings of a continuous strip of sealant. The sealant layer 200 has a first winding 201 having a starting portion 202 and an ending portion 204, wherein the sealant is applied in a strip between the start and end at a zero degree orientation or "straight." The sealant spray orientation is at zero degrees with respect to the tire midcircumferential plane L. The first winding 201 remains oriented at zero degrees until approximately in the range of 320 -358 degrees of tire rotation (i.e., less than 360 degrees of rotation), wherein the end 204 of the first sealant winding is angled in a transition section 210. The end of the transition portion 212 or the start of the second winding 214 is axially spaced apart from the start 202 of the first winding 201. The sealant layer is formed of multiple windings 201, 214, 220, 230, 240, 250, 260 that are oriented at zero degrees with respect to the tire midcircumferential plane and form a straight portion. Each straight portion of each winding is wound from 0 degrees to less than 360 degrees and has an ending 204 connected to an optional transition section. The transition section is angled.

## Claims

1. A method for forming a sealant layer in a tire (1), the method comprising the steps of:
providing a tire (1); and
applying a plurality of strip-shaped windings (201, 214, 220, 230, 240, 250, 260) of a sealant material to form a sealant layer to the inside of the tire (1) under the crown of the tire (1), wherein each winding (201, 214, 220, 230, 240, 250, 260) has a straight portion aligned at a zero degree angle with respect to the tire mid-circumferential plane (L);
**characterized in that** the sealant material is sprayed or extruded onto the inside of the tire (1) in a continuous manner, wherein a number of 5 to 30 strip-shaped windings (201, 214, 220, 230, 240, 250, 260) are applied, and wherein the strip-shaped windings (201, 214, 220, 230, 240, 250, 260) are applied in an abutting manner such that the windings do not overlap or are applied in a spaced manner such that the windings do not overlap and that there is a gap between adjacent windings.

2. The method of claim 1 wherein the tire (1) is rotated circumferentially with respect to a sealant material application means, preferably a nozzle (70), during application of the sealant material; and/or wherein an sealant material application means, preferably a nozzle (70), is rotated circumferentially with respect to the tire (1) during application of the sealant material for applying the sealant material inside of the tire (1).

3. The method of at least one of the previous claims wherein a number of 8 to 12 strip-shaped windings (201, 214, 220, 230, 240, 250, 260) are applied.

4. The method of at least one of the previous claims wherein the straight portion extends over an angular range of 320 degree to 358 degree, preferably 330 degree to 355 degree or 340 to 350 degree.

5. The method of at least one of the previous claims wherein of the plurality of strip-shaped windings (201, 214, 220, 230, 240, 250, 260) each or each except one or two has a transition section (210) inclined under an angle with respect to the tire mid-circumferential plane (L).

6. The method of claim 5 wherein the angle is in a range of from 5 to 30 degree, preferably 10 to 25 degree; and/or wherein the transition section (210) extends over an angular range of from 40 to 2 degree, preferably 30 degree to 5 degree or 20 to 10 degree.

7. The method of at least one of the previous claims wherein each winding (201, 214, 220, 230, 240, 250, 260) is joined together by an angled transition section (210).

8. A tire having a tread, opposed sidewalls and an inner surface opposite the tread, wherein said inner surface has a sealant layer formed by spirally applying a plurality of sealant windings, and wherein each winding has a straight portion aligned at a zero degree angle with respect to the tire mid-circumferential plane (L), **characterized in that** a number of 5 to 30 strip-shaped windings (201, 214, 220, 230, 240, 250, 260) are applied in an abutting manner such that the windings do not overlap or such that the windings do not overlap and that there is a gap between adjacent windings.

## Patentansprüche

1. Verfahren zum Ausbilden einer Dichtmittelschicht in einem Reifen (1), das Verfahren umfassend die Schritte von:
Bereitstellen eines Reifens (1); und
Aufbringen einer Vielzahl von streifenförmigen Windungen (201, 214, 220, 230, 240, 250, 260) eines Dichtmittelmaterials, um eine Dichtmittelschicht auf der Innenseite des Reifens (1) unter dem Scheitel des Reifens (1) auszubilden, wobei jede Windung (201, 214, 220, 230, 240, 250, 260) einen geraden Abschnitt aufweist, der hinsichtlich der Reifenmittelumfangsebene (L) bei einem Winkel von null Grad ausgerichtet ist;
**dadurch gekennzeichnet, dass** das Dichtmittelmaterial auf eine kontinuierliche Weise auf die Innenseite des Reifens (1) gesprüht oder extrudiert wird, wobei eine Anzahl von 5 bis 30 streifenförmigen Windungen (201, 214, 220, 230, 240, 250, 260) aufgebracht werden, und wobei die streifenförmigen Windungen (201,214, 220, 230, 240, 250, 260) derart auf eine anstoßende Weise aufgebracht werden, dass sich die Windungen nicht überlappen, oder auf eine beabstandete Weise derart aufgebracht werden, dass sich die Windungen nicht überlappen und dass ein Abstand zwischen angrenzenden Windungen besteht.

2. Verfahren nach Anspruch 1, wobei der Reifen (1) während des Aufbringens des Dichtmittelmaterials in Umfangsrichtung bezüglich eines Dichtmittelmaterialaufbringungsmittels, vorzugsweise einer Düse (70), gedreht wird; und/oder wobei ein Dichtmittelmaterialaufbringungsmittel, vorzugsweise eine Düse (70), während des Aufbringens des Dichtmittelmaterials in Umfangsrichtung bezüglich des Reifens (1) zum Aufbringen des Dichtmittelmaterials auf der Innenseite des Reifens (1) gedreht wird.

3. Verfahren nach mindestens einem der vorstehenden Ansprüche, wobei eine Anzahl von 8 bis 12 streifenförmigen Windungen (201,214, 220, 230, 240, 250, 260) aufgebracht werden.

4. Verfahren nach mindestens einem der vorstehenden Ansprüche, wobei sich der gerade Abschnitt über einen Winkelbereich von 320 Grad bis 358 Grad, vorzugsweise 330 Grad bis 355 Grad oder 340 bis 350 Grad erstreckt.

5. Verfahren nach mindestens einem der vorstehende Ansprüche, wobei von der Vielzahl von streifenförmigen Windungen (201, 214, 220, 230, 240, 250, 260) jede oder jede außer einer oder zwei einen Übergangsteil (210) aufweist, der unter einem Winkel hinsichtlich der Reifenmittelumfangsebene (L) geneigt ist.

6. Verfahren nach Anspruch 5, wobei der Winkel in einem Bereich von 5 bis 30 Grad, vorzugsweise 10 bis 25 Grad liegt; und/oder wobei sich der Übergangsteil (210) über einen Winkelbereich von 40 bis 2 Grad, vorzugsweise 30 Grad bis 5 Grad oder 20 bis 10 Grad erstreckt.

7. Verfahren nach mindestens einem der vorstehenden Ansprüche, wobei jede Windung (201, 214, 220, 230, 240, 250, 260) durch einen abgewinkelten Übergangsteil (210) miteinander verbunden ist.

8. Reifen, der eine Lauffläche, gegenüberliegenden Seitenwände und eine Innenoberfläche aufweist, die der Lauffläche gegenüberliegt, wobei die Innenoberfläche eine Dichtmittelschicht aufweist, die durch spiralförmiges Aufbringen einer Vielzahl von Dichtmittelwindungen ausgebildet ist, und wobei jede Windung einen geraden Abschnitt aufweist, der hinsichtlich der Reifenmittelumfangsebene (L) bei dem Winkel von null Grad ausgerichtet ist, **dadurch gekennzeichnet, dass** eine Anzahl von 5 bis 30 streifenförmigen Windungen (201,214, 220, 230, 240, 250, 260) derart auf Stoß aufgebracht werden, dass sich die Windungen nicht überlappen, oder derart, dass sich die Windungen nicht überlappen und dass zwischen angrenzenden Windungen ein Abstand besteht.

## Revendications

1. Procédé destiné à la formation d'une couche faisant office d'agent d'étanchéité dans un bandage pneumatique (1), le procédé comprenant les étapes au cours desquelles :
on procure un bandage pneumatique (1) ; et
on applique plusieurs enroulements qui possèdent une configuration en forme de bandes (201, 214, 220, 230, 240, 250, 260) d'un matériau procurant un effet d'étanchéité afin d'obtenir une couche faisant office d'agent d'étanchéité sur le côté interne du bandage pneumatique (1) en dessous du sommet du bandage pneumatique (1) ; dans lequel chaque enroulement (201, 214, 220, 230, 240, 250, 260) possède une portion de forme rectiligne qui est mise en alignement en formant un angle de zéro degré par rapport au plan circonférentiel médian (L) du bandage pneumatique ;
**caractérisé en ce que** le matériau procurant un effet d'étanchéité est pulvérisé ou est extrudé sur le côté interne du bandage pneumatique (1) d'une manière continue ; dans lequel on applique un nombre de 5 à 30 enroulements possédant une configuration en forme de bandes (201, 214, 220, 230, 240, 250, 260) ; et dans lequel on applique les enroulements possédant une configuration en forme de bandes (201, 214, 220, 230, 240, 250, 260) selon une configuration en bout-à-bout, tant et si bien que les enroulements ne se chevauchent pas, ou bien on les applique d'une manière espacée, tant et si bien que les enroulements ne se chevauchent pas et que l'on obtient un espace libre entre des enroulements adjacents.

2. Procédé selon la revendication 1, dans lequel on soumet le bandage pneumatique (1) à une rotation dans la direction circonférentielle par rapport à un moyen d'application d'un matériau procurant un effet d'étanchéité, de préférence une buse (70), au cours de l'application du matériau procurant un effet d'étanchéité ; et/ou dans lequel on soumet un moyen d'application d'un matériau procurant un effet d'étanchéité, de préférence une buse (70), à une rotation dans la direction circonférentielle par rapport au bandage pneumatique (1) au cours de l'application du matériau procurant un effet d'étanchéité dans le but d'appliquer le matériau procurant un effet d'étanchéité sur le côté interne du bandage pneumatique (1).

3. Procédé selon au moins une des revendications précédentes, dans lequel on applique un nombre de 8 à 12 enroulements possédant une configuration en forme de bandes (201, 214, 220, 230, 240, 250, 260).

4. Procédé selon au moins une des revendications précédentes, dans lequel la portion de forme rectiligne s'étend sur une plage angulaire de 320 degrés à 358 degrés, de préférence de 330 degrés à 355 degrés ou de 340 à 350 degrés.

5. Procédé selon au moins une des revendications précédentes, dans lequel, parmi lesdits plusieurs enroulements possédant une configuration en forme de bandes (201, 214, 220, 230, 240, 250, 260), chacun d'eux ou chacun d'eux à l'exception de l'un ou de deux de ces derniers possède(nt) un tronçon de transition (210) qui est incliné en formant un angle par rapport au plan circonférentiel médian (L) du bandage pneumatique.

6. Procédé selon la revendication 5, dans lequel l'angle se situe dans une plage allant de 5 à 30 degrés, de préférence de 10 à 25 degrés ; et/ou dans lequel le tronçon de transition (210) s'étend sur une plage angulaire allant de 40 à 2 degrés, de préférence de 30 degrés à 5 degrés ou de 20 à 10 degrés.

7. Procédé selon au moins une des revendications précédentes, dans lequel les enroulements possédant une configuration en forme de bandes (201, 214, 220, 230, 240, 250, 260) sont joints respectivement les uns aux autres par l'intermédiaire d'un tronçon de transition de forme angulaire (210).

8. Bandage pneumatique qui possède une bande de roulement, des flancs opposés et une surface interne opposée à la bande de roulement ; dans lequel ladite surface interne possède une couche faisant office d'agent d'étanchéité que l'on obtient par l'intermédiaire d'une application en spirale d'un certain nombre d'enroulements procurant une étanchéité ; et dans lequel chaque enroulement possède une portion de forme rectiligne qui est mise en alignement en formant un angle de zéro degré par rapport au plan circonférentiel médian (L) du bandage pneumatique ; **caractérisé en ce que** l'on applique un nombre de 5 à 30 enroulements possédant une configuration en forme de bandes (201, 214, 220, 230, 240, 250, 260) selon une configuration en bout-à-bout, tant et si bien que les enroulements ne se chevauchent pas ou tant et si bien que les enroulements possédant une configuration en forme de bandes ne se chevauchent pas et que l'on obtient un espace libre entre des enroulements adjacents.
